# EUROPÄISCHE PATENTANMELDUNG

(11) **EP 4 746 597 A1**
(43) Veröffentlichungstag der Anmeldung: **20.05.2026**
(21) Anmeldenummer: 25214906.7
(22) Anmeldetag: 11.11.2025
(51) Int. Cl.: H05K 5/00, H05K 5/02, G01D 11/24

(54) **ELEKTRONISCHE BAUGRUPPE**

(30) Priorität: 18.11.2024 DE 102024133705
(71) Anmelder: LEONI Bordnetz-Systeme GmbH, 97318 Kitzingen (DE)
(72) Erfinder: RAU, Markus, 97318 Kitzingen (DE); SEIDEL, Toralf, 97232 Giebelstadt (DE); WOLLNY, Stefan, 97080 Würzburg (DE); ENDRES, Michael, 97070 Würzburg (DE)
(74) Vertreter: Frenkel, Matthias Alexander

(57) **Zusammenfassung**

Die Erfindung bezieht auf eine elektronische Baugruppe, insbesondere für einen Leitungssatz eines Fahrzeugs, sowie auf ein Verfahren zur Herstellung der elektronischen Baugruppe und einen Leitungssatz mit mindestens einer solchen elektronischen Baugruppe. Ein Ausführungsbeispiel der elektronische Baugruppe (1) weist auf: ein elektronisches Bauelement (20), insbesondere ein Sensorelement; ein Gehäuse (10) mit einer Aufnahme (12), die ausgebildet ist, das elektronische Bauelement (20) aufzunehmen; mindestens zwei Stiftkontakte (30), die zumindest abschnittsweise in dem Gehäuse (10) aufgenommen und mit dem elektronischen Bauelement (20) verbunden sind; und mindestens zwei Kontaktelemente (40), die zumindest abschnittsweise, unter Bildung einer formschlüssigen Verbindung mit dem Gehäuse (10), in dem Gehäuse (10) aufgenommen sind, jeweils ausgebildet sind, zumindest abschnittsweise einen Kontakt mit jeweils einem der mindestens zwei Stiftkontakte (30) einzugehen, und jeweils an einem Ende mit mindestens einer Leitung (100) verbindbar oder verbunden sind.

## Beschreibung

Die Erfindung betrifft allgemein eine elektronische Baugruppe. Im Speziellen bezieht sich die Erfindung auf eine elektronische Baugruppe, insbesondere für einen Leitungssatz eines Fahrzeugs, sowie auf ein Verfahren zur Herstellung der elektronischen Baugruppe und auf einen Leitungssatz mit einer solchen elektronischen Baugruppe.

Zur elektrischen Kontaktierung eines elektrischen Bauteils oder Bauelements, beispielsweise eines SMD (SMD: surface mounted device) Bauteils, wird üblicherweise eine Leiterplatte (PCB: printed circuit board) benötigt. Zur elektrischen Verbindung einer PCB mit einem Leitungssatz eines Fahrzeugs wird üblicherweise ein Steckersystem benötigt, welches eine Stiftleiste (oftmals auch als Pin Header bezeichnet) aufweist, die mit der PCB verlötet wird, sowie einen Stecker auf der Seite des Leitungssatzes.

Ein Beispiel hierfür ist aus der US 2019/0306996 A1 bekannt. Die US 2019/0306996 A1 bezieht sich auf eine Vorrichtung, die eine elektronische Baugruppe und ein Gehäuse umfasst. Die elektronische Baugruppe umfasst ein Sensormodul, das auf einem Substrat montiert oder darin verkapselt ist. Das Gehäuse weist im Allgemeinen einen Sensorhohlraum auf, der für die Aufnahme der elektronischen Baugruppe konfiguriert ist, einen Steckverbinderhohlraum, der für die Verbindung mit einem Kabelbaumstecker konfiguriert ist, eine Wand, die den Sensorhohlraum und den Steckverbinderhohlraum trennt, und eine Vielzahl von Anschlüssen mit einem ersten Ende, das sich von der Wand in den Sensorhohlraum erstreckt, und einem zweiten Ende, das sich von der Wand in den Steckverbinderhohlraum erstreckt. Das erste Ende jedes Anschlusses ist im Allgemeinen so ausgebildet, dass es eine elektrische und mechanische Verbindung mit einem entsprechenden leitenden Pad des Substrats bildet.

In letzter Zeit wurde versucht, bei derartigen Verbindungen auf die PCB zu verzichten.

Aus der US 2019/0305491 A1 ist ein solcher Ansatz bekannt. Die US 2019/0305491 A1 betrifft eine Vorrichtung, die ein Sensorpaket, ein Gehäuse und einen oder mehrere Anschlüsse umfasst. Das Gehäuse umfasst einen ersten Hohlraum, der zur Aufnahme des Sensorpakets konfiguriert ist, einen zweiten Hohlraum, der zur Aufnahme eines elektrischen Anschlusses konfiguriert ist, und eine Wand, die die Hohlräume trennt. In dem ersten Hohlraum werden Enden der Anschlüsse mit dem Sensorpaket verlötet. In dem zweiten Hohlraum wird eine elektrische Verbindung zwischen den Anschlüssen und einem Leitungssatz eines Fahrzeugs hergestellt.

Es besteht ein Bedarf an einem verbesserten Ansatz zur Bereitstellung einer elektronischen Baugruppe, insbesondere für einen Leitungssatz eines Fahrzeugs, sowie zur Bereitstellung eines Verfahrens zur Herstellung einer solchen Baugruppe. Zudem besteht ein Bedarf an einem Leitungssatz mit einer solchen Baugruppe.

Gemäß einem ersten Aspekt wird eine elektronische Baugruppe, insbesondere für einen Leitungssatz eines Fahrzeugs, vorgeschlagen. Die elektronische Baugruppe weist ein elektronisches Bauelement, ein Gehäuse, mindestens zwei Stiftkontakte und mindestens zwei Kontaktelemente auf. Das Gehäuse weist eine Aufnahme auf. Die Aufnahme ist ausgebildet, das elektronische Bauelement aufzunehmen. Die mindestens zwei Stiftkontakte sind zumindest abschnittsweise in dem Gehäuse aufgenommen. Die mindestens zwei Stiftkontakte sind mit dem elektronischen Bauelement verbunden. Die mindestens zwei Kontaktelemente sind, unter Bildung einer formschlüssigen Verbindung mit dem Gehäuse, zumindest abschnittsweise in dem Gehäuse aufgenommen. Die mindestens zwei Kontaktelemente sind jeweils ausgebildet, zumindest abschnittsweise einen Kontakt mit jeweils einem der mindestens zwei Stiftkontakte einzugehen. Die mindestens zwei Kontaktelemente sind an einem Ende mit mindestens einer Leitung verbindbar oder verbunden.

Bei der fertigen elektronischen Baugruppe ist das elektronische Bauelement in der/die Aufnahme des Gehäuses aufgenommen. Die mindestens zwei Kontaktelemente können beispielsweise jeweils an einem ihrer jeweiligen Enden mit mindestens einer Leitung verbindbar oder verbunden sein.

Das Gehäuse kann eine Oberseite und eine Unterseite aufweisen. Das Gehäuse kann ein erstes und ein zweites Ende aufweisen.

Die Oberseite des Gehäuses kann eine Durchführung aufweisen, die dazu eingerichtet ist, einen, insbesondere Kabel-, Binder aufzunehmen und mit jenem die elektronische Baugruppe auf/an zumindest einer Leitung zu fixieren oder zu befestigen. Die Durchführung kann das Gehäuse quer zu einer Längsachse des Gehäuses überragen.

Die erste Oberfläche kann, insbesondere (ausschließlich) an den ersten und zweiten Enden jeweils einen Rand aufweisen, der die erste Oberfläche zumindest im Wesentlichen überragt.

Das erste und zweite Ende können jeweils einen Fixiersteg aufweisen. Der Fixiersteg kann eben mit der Unterseite des Gehäuses ausgebildet sein. Der Fixiersteg kann sich entlang der Längsachse des Gehäuses erstrecken. Der Fixiersteg kann dazu eingerichtet sein, ein Band/Tape aufzunehmen und mit jenem die elektronische Baugruppe auf/an zumindest einer Leitung befestigt zu werden.

Die ersten und zweiten Enden können jeweils eine Durchführung aufweisen. Die Durchführung kann dazu eingerichtet sein, einen, insbesondere Kabel-, Binder aufzunehmen und mit jenem die elektronische Baugruppe auf zumindest einer Leitung zu befestigen/fixieren.

Ein Vorteil daran ist, dass die elektronische Baugruppe flexibler und anpassungsfähiger in verschiedenen Anwendungsbereichen einsetzbar ist.

Die mindestens zwei Kontaktelemente sind jeweils ausgebildet, zumindest abschnittsweise einen Kontakt mit jeweils einem der mindestens zwei Stiftkontakte einzugehen. In dem Bereich, in dem Kontakt zwischen den mindestens zwei Kontaktelementen und den mindestens zwei Stiftkontakten besteht, können sich die jeweils kontaktierenden der mindestens zwei Kontaktelemente und der mindestens zwei Stiftelemente insbesondere in einem gemeinsamen Raum verbinden. Dieser gemeinsame Raum ist beispielsweise nicht in einen separaten Bereich für die Stiftkontakte und einen separaten Bereich für die Kontaktelemente aufgeteilt.

Durch die elektronische Baugruppe kann ein elektronisches Bauelement auf einfache Weise integriert werden. Zudem wird eine einfache Verbindung des elektronischen Bauelements an Leitungen, insbesondere an einen Leitungssatz, bereitgestellt. Die elektronische Baugruppe kann somit zugleich als ein Stecker zur Verbindung von einem elektronischen Bauelement und von Leitungen fungieren, beispielsweise als ein Leitungssatz-Stecker zur Verbindung eines elektronischen Bauelements mit einem Leitungssatz eines Fahrzeugs. Es wird somit eine (hoch-)integrierte Komponente bereitgestellt, um ein elektronisches Bauelement mit Leitungen, beispielsweise einem Leitungssatz, zu verbinden. Auf ein zusätzliches Steckergehäuse zur Verbindung der mindestens einen Leitung kann verzichtet werden.

Die mindestens zwei Stiftkontakte sind mit dem elektronischen Bauelement verbunden. Unter der Verbindung der mindestens zwei Stiftkontakte mit dem elektronischen Bauelement kann insbesondere eine elektrische Verbindung verstanden werden. Unter der Verbindung der mindestens zwei Stiftkontakte mit dem elektronischen Bauelement kann ferner eine mechanische Verbindung verstanden werden. Die mechanische Verbindung der mindestens zwei Stiftkontakte mit dem elektronischen Bauelement kann zu einer elektrischen Verbindung der mindestens zwei Stiftkontakte mit dem elektronischen Bauelement führen.

Die mindestens zwei Kontaktelemente sind jeweils ausgebildet, zumindest abschnittsweise einen Kontakt mit jeweils einem der mindestens zwei Stiftkontakte einzugehen. Unter dem Kontakt der mindestens zwei Kontaktelemente mit dem jeweiligen Stiftkontakt kann insbesondere ein elektrischer Kontakt verstanden werden. Unter dem Kontakt der mindestens zwei Kontaktelemente mit dem jeweiligen Stiftkontakt kann ferner ein mechanischer Kontakt verstanden werden. Der mechanische Kontakt der mindestens zwei Kontaktelemente mit den mindestens zwei Stiftkontakten kann jeweils zu einem elektrischen Kontakt der mindestens zwei Kontaktelemente mit den mindestens zwei Stiftkontakten führen.

Die Stiftkontakte können entsprechend Stiftkontakten einer Stiftleiste ausgebildet sein. Eine Stiftleiste (englisch: pin header) ist ein Steckverbinder mit mehreren in Reihe, manchmal auch in mehreren Reihen, angeordneten Stiftkontakten.

Das elektronische Bauelement kann ein Sensorelement aufweisen oder als ein Sensorelement ausgebildet sein. Das Sensorelement kann beispielsweise ein NTC (NTC: Negative Temperature Coefficient) Element zur Temperaturmessung aufweisen oder als ein NTC Element zur Temperaturmessung ausgebildet sein.

Die mindestens eine Leitung kann eine Leitung eines Leitungssatzes oder in einem Leitungssatz eines Fahrzeugs sein. Die mindestens eine Leitung kann auch als mindestens eine elektrische Leitung bezeichnet werden. Die mindestens eine Leitung kann jeweils mindestens eine elektrisch leitfähige Ader aufweisen. Die mindestens eine Leitung kann jeweils mindestens eine Isolation aufweisen. Die mindestens eine Leitung kann eine oder mehrere Adern aufweisen, über die Energie und/oder Informationen übertragen werden kann/können. Mehrere Leitungen oder Kabel bilden den Leitungssatz. Der Leitungssatz kann auch als Kabelbaum oder Kabelsatz oder Bordnetz bezeichnet werden. Der Leitungssatz eines Fahrzeugs verbindet für gewöhnlich mehrere, insbesondere alle, elektrische und/oder elektronische Komponenten (z. B. Antriebe, Aktoren, Sensoren, Displays, Steuergeräte, Energiequellen etc.) in einem Fahrzeug.

Das elektronische Bauelement kann mit den mindestens zwei Stiftkontakten über eine stoffschlüssige Verbindung verbunden sein. Die stoffschlüssige Verbindung kann beispielsweise eine Lötverbindung und/oder eine Schweißverbindung aufweisen oder als eine Lötverbindung und/oder eine Schweißverbindung ausgebildet sein. Beispielsweise kann das elektronische Bauelement ein oberflächenmontiertes Bauelement (SMD: surface mounted device) aufweisen oder als SMD ausgebildet sein. SMD Bauelemente können normalerweise direkt auf eine Platine/Leiterplatte oder auf Kupferpads oder Kupferanschlüsse usw. gelötet und/oder geschweißt werden. SMD Bauelemente weisen hierfür normalerweise lötfähige Anschlussflächen oder -beinchen auf. Entsprechend kann das elektronische Bauelement lötfähige und/oder schweißfähige Anschlussflächen oder Anschlussbeinchen aufweisen. Die lötfähigen und/oder schweißfähigen Anschlussflächen oder Anschlussbeinchen können mit den mindestens zwei Stiftkontakten verlötet und/oder verschweißt werden. Insbesondere kann jeder der mindestens zwei Stiftkontakte mit einer zugehörigen Anschlussfläche oder einem zugehörigen Anschlussbeinchen verlötet und/oder verschweißt werden. Das Gehäuse kann ein Kunststoffgehäuse aufweisen oder als ein Kunststoffgehäuse ausgebildet sein.

Die mindestens zwei Kontaktelemente können jeweils ausgebildet sein, zumindest abschnittsweise einen lösbaren Kontakt mit jeweils einem der mindestens zwei Stiftkontakte einzugehen. Der lösbare Kontakt kann auch als eine lösbare Verbindung bezeichnet werden. Unter einem lösbaren Kontakt / einer lösbaren Verbindung kann insbesondere verstanden werden, dass der lösbare Kontakt / die lösbare Verbindung und/oder über den lösbaren Kontakt / die lösbare Verbindung verbundene Elemente oder Komponenten mit normalem Kraftaufwand und/oder zerstörungsfrei gelöst werden kann/können. Lösbare Kontakte / Verbindungen können sozusagen ohne Beschädigung und/oder Zerstörung der verbundenen Bauteile getrennt und erneut fixiert werden. Lösbare Kontakte / Verbindungen umfassen Bauelemente/Bauteile, die ohne Zerstörung der verbundenen Bauelemente/Bauteile und mindestens eines Verbindungselements getrennt und wieder zusammengefügt werden können.

Die mindestens zwei Kontaktelemente können jeweils ausgebildet sein, zumindest abschnittsweise die mindestens zwei Stiftkontakte zu umgeben. Die mindestens zwei Kontaktelemente können jeweils ausgebildet sein, zumindest abschnittsweise die mindestens zwei Stiftkontakte derart zu umgeben, dass jeweils zumindest ein Abschnitt der mindestens zwei Stiftkontakte und jeweils zumindest ein Abschnitt der mindestens zwei Kontaktelemente miteinander in Kontakt stehen. Der zumindest eine Abschnitt kann sich beispielsweise zumindest teilweise, insbesondere vollumfänglich, in Umfangsrichtung der mindestens zwei Stiftkontakte erstrecken. Der zumindest eine Abschnitt kann sich beispielsweise entlang eines Teils der mindestens zwei Stiftkontakte in Längsrichtung der mindestens zwei Stiftkontakte erstrecken. Die mindestens zwei Kontaktelemente können jeweils ein oder mehrere Crimpkontakte aufweisen oder als ein oder mehrere Crimpkontakte ausgebildet sein.

Die mindestens zwei Stiftkontakte können zumindest abschnittsweise spielfrei in zumindest zwei zumindest nahezu säulenförmigen Ausnehmungen in dem Gehäuse aufgenommen sein. Beispielsweise kann ein erster Abschnitt der mindestens zwei Stiftkontakte spielfrei in den zumindest zwei zumindest nahezu säulenförmigen Ausnehmungen in dem Gehäuse aufgenommen sein. Der erste Abschnitt kann auch als Fixierabschnitt oder Fixierbereich der Stiftkontakte bezeichnet werden, da in diesem Abschnitt die Stiftkontakte in den Ausnehmungen oder durch Seitenwände um die Ausnehmungen (aufgrund des fehlenden Spiels) fixiert sind/werden. Eine Säulenform kann hierin als eine Form verstanden werden, welche sich ausgehend von einer Grundfläche beliebiger zweidimensionaler Form über eine Mantelfläche zu einer weiteren Grundfläche beliebiger zweidimensionaler Form erstreckt. Die Mantelfläche kann Unterbrechungen aufweisen und/oder kann verschiedene Formen annehmen. Ein Querschnitt der zumindest zwei zumindest nahezu säulenförmigen Ausnehmungen kann rund, insbesondere kreisförmig oder oval oder elliptisch, oder eckig, insbesondere rechteckig oder quadratisch oder mehreckig, sein. Auch eine Kombination aus einem runden und eckigen Querschnitt ist denkbar. Beispielsweise können die säulenförmigen Ausnehmungen als zumindest nahezu quaderförmige oder zylinderförmige Ausnehmungen ausgebildet sein oder als eine Kombination daraus.

Die mindestens zwei Stiftkontakte können zumindest abschnittsweise mit einem Spiel in (den) zumindest zwei zumindest nahezu säulenförmigen Ausnehmungen in dem Gehäuse aufgenommen sein. Beispielsweise kann ein zweiter Abschnitt der mindestens zwei Stiftkontakte zumindest abschnittsweise mit einem Spiel in den zumindest zwei zumindest nahezu säulenförmigen Ausnehmungen in dem Gehäuse aufgenommen sein. Der erste Abschnitt der mindestens zwei Stiftkontakte und der zweite Abschnitt der mindestens zwei Stiftkontakte können einen unterschiedlichen Umfang oder Durchmesser aufweisen.

Die zumindest zwei zumindest nahezu säulenförmigen Ausnehmungen können beispielsweise jeweils zumindest zwei Abschnitte mit einem voneinander verschiedenen Umfang oder Durchmesser aufweisen. Beispielsweise kann ein erster Abschnitt der zumindest zwei zumindest nahezu säulenförmigen Ausnehmungen einen unterschiedlichen Umfang oder Durchmesser als ein zweiter Abschnitt der zumindest zwei zumindest nahezu säulenförmigen Ausnehmungen aufweisen. Der erste Abschnitt kann sich näher an dem elektronischen Bauelement befinden als der zweite Abschnitt. Der erste Abschnitt kann einen kleineren Umfang oder Durchmesser aufweisen als der zweite Abschnitt.

Die mindestens zwei Kontaktelemente können beispielsweise entlang ihrer gesamten Länge in dem Gehäuse, insbesondere in den zumindest zwei zumindest nahezu säulenförmigen Ausnehmungen, aufgenommen sein.

Die mindestens zwei Kontaktelemente können zumindest abschnittsweise in (den) zumindest zwei zumindest nahezu säulenförmigen Ausnehmungen in dem Gehäuse aufgenommen sein. Beispielsweise kann ein Umfang oder Durchmesser der mindestens zwei Kontaktelemente größer sein als ein Umfang oder Durchmesser der mindestens zwei Stiftkontakte. Beispielsweise können die mindestens zwei Kontaktelemente in dem oben genannten zweiten Abschnitt der zumindest zwei zumindest nahezu säulenförmigen Ausnehmungen zumindest nahezu vollständig aufgenommen sein. Jeweils einer der mindestens zwei Stiftkontakte und jeweils eines der mindestens zwei Kontaktelemente können in der gleichen der mindestens zwei säulenförmigen Ausnehmungen angeordnet sein, insbesondere ohne durch eine Wand oder andere Trennung voneinander separiert zu sein.

Die mindestens zwei Kontaktelemente können jeweils ein Arretierungselement aufweisen. Das Arretierungselement kann beispielsweise als ein Rastelement oder Schnappelement ausgebildet sein oder ein Rastelement oder Schnappelement aufweisen. Das Gehäuse kann mindestens eine Arretierungsöffnung aufweisen. Das jeweilige Arretierungselement kann ausgebildet und angeordnet sein, mit der Arretierungsöffnung des Gehäuses die formschlüssige Verbindung zu bilden. Beispielsweise kann das jeweilige Rastelement ausgebildet und angeordnet sein, mit der Arretierungsöffnung des Gehäuses zur Bildung der formschlüssigen Verbindung zu verrasten. Beispielsweise kann das jeweilige Schnappelement ausgebildet und angeordnet sein, in die Arretierungsöffnung des Gehäuses zur Bildung der formschlüssigen Verbindung einzuschnappen.

Das Gehäuse kann mindestens eine Inspektionsöffnung aufweisen. Die mindestens eine Inspektionsöffnung kann sich in einem Bereich befinden, in dem ein Endbereich der Kontaktelemente liegt, wenn die Kontaktelemente vollständig in die Ausnehmungen eingebracht sind/wurden. Auf diese Weise kann durch die mindestens eine Inspektionsöffnung geprüft / überprüft werden, ob die Kontaktelemente und die Stiftkontakte wie gewünscht in Kontakt miteinander stehen.

Gemäß einem zweiten Aspekt wird ein Verfahren zur Herstellung einer elektronischen Baugruppe, insbesondere für einen Leitungssatz eines Fahrzeugs, vorgeschlagen. Das Verfahren umfasst ein Aufnehmen eines elektronischen Bauelements, insbesondere eines Sensorelements, in einer Aufnahme eines Gehäuses. Das Verfahren umfasst ein zumindest abschnittsweises Aufnehmen von mindestens zwei Stiftkontakten in dem Gehäuse. Das Verfahren umfasst ein Verbinden der mindestens zwei Stiftkontakte mit dem elektronischen Bauelement. Das Verfahren umfasst ein zumindest abschnittsweises Aufnehmen von mindestens zwei Kontaktelementen in dem Gehäuse unter Bildung einer formschlüssigen Verbindung mit dem Gehäuse. Das Verfahren umfasst ein zumindest abschnittsweises Eingehen eines Kontakts zwischen jeweils einem der mindestens zwei Stiftkontakte und jeweils einem der mindestens zwei Kontaktelemente. Das Verfahren umfasst ein Verbinden der mindestens zwei Kontaktelemente an einem Ende mit jeweils mindestens einer Leitung.

Die elektronische Baugruppe ist insbesondere ausgebildet wie die elektronische Baugruppe gemäß dem ersten Aspekt.

Das Aufnehmen der mindestens zwei Stiftkontakte in dem Gehäuse kann ein Umspritzen der mindestens zwei Stiftkontakte mit einem das Gehäuse bildenden Material umfassen. Das Material kann insbesondere ein Kunststoff sein oder einen Kunststoff aufweisen. Alternativ kann das Aufnehmen der mindestens zwei Stiftkontakte in dem Gehäuse ein Einbringen, insbesondere ein Einschieben oder Einschießen, der mindestens zwei Stiftkontakte in das Gehäuse umfassen. Auch in diesem Fall kann das Gehäuse aus einem Kunststoff gebildet sein oder Kunststoff aufweisen.

Das Verbinden der mindestens zwei Stiftkontakte mit dem elektronischen Bauelement kann ein, insbesondere induktionsbasiertes, Verlöten der mindestens zwei Stiftkontakte mit dem elektronischen Bauelement umfassen. Zusätzlich oder alternativ kann das Verbinden der mindestens zwei Stiftkontakte mit dem elektronischen Bauelement ein Schweißen, beispielsweise Widerstandsschweißen, insbesondere Mikro-Widerstandsschweißen, umfassen. Das Mikro-Widerstandsschweißen eignet sich besonders gut zum Verbinden von kleinen elektronischen Bauteilen, da damit eine sehr präzise Energieeinbringung nach dem Effekt des elektrischen Widerstandes vorgenommen werden kann und keine Verbrauchsmaterialien, wie beispielsweise eine Lötpaste, auf die Fügestelle appliziert werden müssen. Außerdem sind die Bauteile einer geringen thermischen Belastung ausgesetzt.

Das Verlöten kann folgende Verfahrensschritte umfassen: Auftragen einer Lötpaste auf das elektronische Bauelement und/oder auf die zumindest zwei Stiftkontakte; Kontaktieren/Zusammenführen der zumindest zwei Stiftkontakte und des elektronischen Bauelements; Erhitzen, insbesondere induktives Erhitzen, der Lötpaste.

Das Verschweißen, insbesondere Widerstandsschweißen kann folgende Verfahrensschritte umfassen: Kontaktieren/Zusammenführen der zumindest zwei Stiftkontakte und des elektronischen Bauelements; Erhitzen, insbesondere durch eine Kontaktierung von zumindest einem der Stiftkontakte mittels/durch/von Schweißelektroden mit einer vordefinierten Anpresskraft; Bestromung (hochkonzentrierter Stromimpuls) der an dem Stiftkontakt anliegenden Schweißelektroden; Abkühlen der Schweißstelle; Auflösen der Anpresskraft.

Das zumindest abschnittsweise Eingehen des Kontakts zwischen jeweils einem der mindestens zwei Stiftkontakte und jeweils einem der mindestens zwei Kontaktelemente kann ein Eingehen eines lösbaren Kontakts zwischen jeweils einem der mindestens zwei Stiftkontakte und jeweils einem der mindestens zwei Kontaktelemente umfassen.

Das zumindest abschnittsweise Eingehen des Kontakts zwischen jeweils einem der mindestens zwei Stiftkontakte und jeweils einem der mindestens zwei Kontaktelemente kann ein Aufschieben der mindestens zwei Kontaktelemente auf die mindestens zwei Stiftkontakte umfassen.

Das zumindest abschnittsweise Aufnehmen der mindestens zwei Kontaktelemente in dem Gehäuse unter Bildung einer formschlüssigen Verbindung mit dem Gehäuse kann ein Einschieben der mindestens zwei Kontaktelemente in das Gehäuse umfassen. Das zumindest abschnittsweise Aufnehmen der mindestens zwei Kontaktelemente in dem Gehäuse unter Bildung einer formschlüssigen Verbindung mit dem Gehäuse kann ein Verrasten oder Verschnappen der mindestens zwei Kontaktelemente mit dem Gehäuse umfassen.

Gemäß einem dritten Aspekt wird ein Leitungssatz für ein Fahrzeug vorgeschlagen. Der Leitungssatz weist mehrere Leitungen auf. Der Leitungssatz weist mindestens eine elektronische Baugruppen gemäß dem ersten Aspekt auf.

Der Leitungssatz kann mindestens eine mit dem Leitungssatz verbundene Energiequelle, wie eine Niedervolt-Energiequelle oder Niedervolt-Energieversorgung oder Hochvolt-Energiequelle oder Hochvolt-Energieversorgung aufweisen. Der Leitungssatz kann mehrere mit dem Leitungssatz verbundene elektrische und/oder elektronische Komponenten aufweisen, wie beispielsweise Sensoren und/oder Aktuatoren/Aktoren. Insbesondere kann der Leitungssatz im Niedervolt-Bereich angedacht sein, z. B. für Signale und Versorgungsspannungen in Anwendungen wie Break by wire, Achsleitungssätzen, etc.

Der Leitungssatz kann eine Vielzahl von elektronischen Baugruppen gemäß dem ersten Aspekt aufweisen. Anders ausgedrückt, es kann eine Vielzahl von elektronischen Baugruppen in dem Leitungssatz vorgesehen sein. Die elektronischen Baugruppen gemäß dem ersten Aspekt können zumindest teilweise gleich und/oder zumindest teilweise unterschiedlich ausgebildet sein. Genauer gesagt kann in den elektronischen Baugruppen gemäß dem ersten Aspekt zumindest teilweise ein gleiches elektronisches Bauelement und zumindest teilweise ein unterschiedliches elektronisches Bauelement in dem jeweiligen Gehäuse aufgenommen sein/werden. Der Leitungssatz kann eine Vielzahl von Leitungen aufweisen. An jeder elektronischen Baugruppe der mehreren elektronischen Baugruppen kann jeweils mindestens eine Leitung angeordnet sein/werden.

Auch wenn einige der voranstehend beschriebenen Aspekte in Bezug auf die elektronische Baugruppe gemäß dem ersten Aspekt beschrieben wurden, so können diese Aspekte auch in entsprechender Weise in dem Verfahren gemäß dem zweiten Aspekt und/oder dem Leitungssatz gemäß dem dritten Aspekt realisiert sein/werden und umgekehrt.

Die vorliegende Erfindung soll anhand von Figuren weiter erläutert werden. Diese Figuren zeigen schematisch:
- Figur 1: eine Oberseite einer elektronischen Baugruppe gemäß einem Ausführungsbeispiel;
- Figur 2: perspektivisch eine Oberseite einer elektronischen Baugruppe gemäß dem Ausführungsbeispiel aus Figur 1;
- Figur 3: perspektivisch eine Unterseite einer elektronischen Baugruppe gemäß dem Ausführungsbeispiel aus Figur 1.
- Figur 4: eine perspektivische Darstellung einer elektronischen Baugruppe gemäß dem Ausführungsbeispiel aus Figur 1 ohne Gehäuse.
- Figuren 5a bis 5d: Verfahrensschritte zur Herstellung einer elektronischen Baugruppe gemäß dem Ausführungsbeispiel aus Figur 1 in einer Draufsicht.
- Figur 6: perspektivische Ansichten einer elektronischen Baugruppe gemäß zwei Variante eines Ausführungsbeispiel;
- Figur 7: perspektivische Ansichten einer elektronischen Baugruppe gemäß zwei weiterer Varianten eines Ausführungsbeispiel;

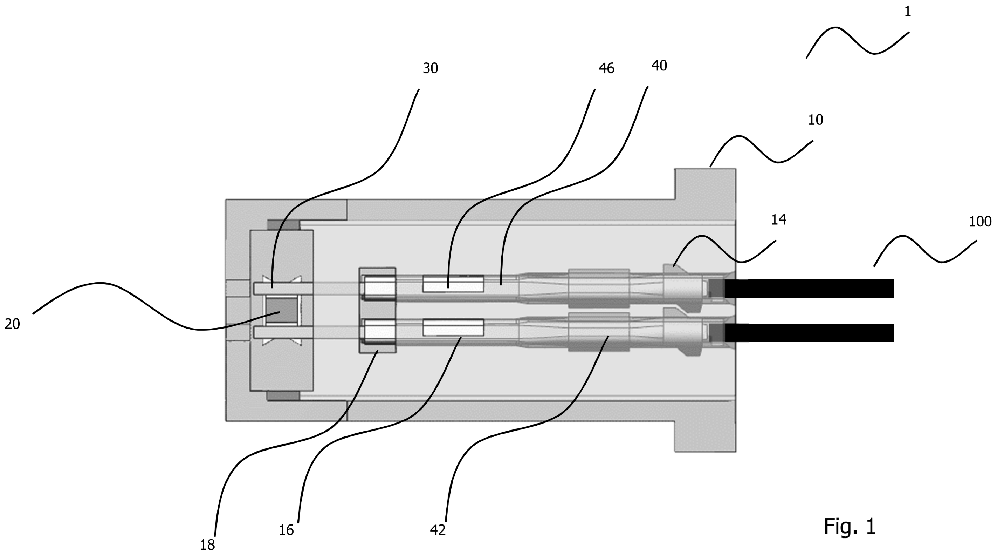

In Figur 1 ist schematisch eine Oberseite einer elektronischen Baugruppe 1 gemäß einem Ausführungsbeispiel in einer halbtransparenten Darstellung gezeigt. Die halbtransparente Darstellung gestattet eine Innenansicht durch die Oberseite der elektronischen Baugruppe 1.

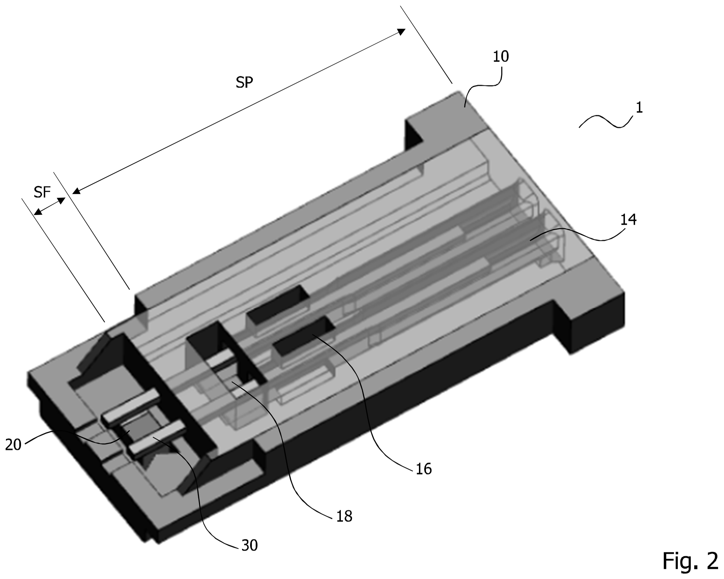

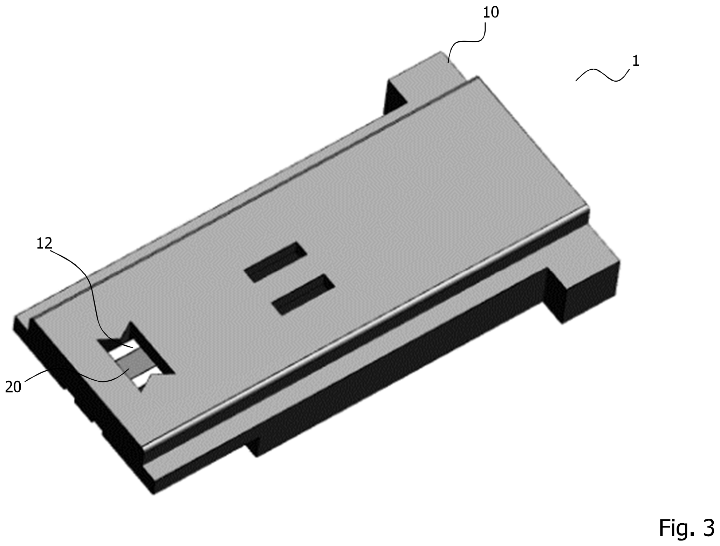

Die elektronische Baugruppe 1 ist insbesondere geeignet für einen oder einsetzbar in/mit einem Leitungssatz eines Fahrzeugs. Die elektronische Baugruppe 1 weist ein elektronisches Bauelement 20 auf. Das elektronische Bauelement 20 ist in Bezug auf Figur 1 und die weiteren Figuren beispielhaft als Sensorelement ausgebildet und wird demnach im Folgenden auch als Sensorelement 20 bezeichnet. Gemäß einem Beispiel kann das Sensorelement 20 als ein SMD Bauelement ausgebildet sein. Die elektronische Baugruppe 1 weist ein Gehäuse 10 mit einer Aufnahme 12 auf (siehe Figur 3). Die Aufnahme 12 ist ausgebildet, das Sensorelement 20 aufzunehmen. Wie in Bezug auf die Figuren 1 bis 3 zu erkennen, durchdringt die Aufnahme 12 beispielhaft das Gehäuse 10 vollständig und ist somit sowohl von der Oberseite (siehe Figuren 1 und 2) als auch von der Unterseite (siehe Figur 3) zugänglich. Anders ausgedrückt verbindet die Aufnahme 12 die Ober- und Unterseite des Gehäuses.

Die elektronische Baugruppe 1 weist in dem in den Figuren gezeigten Ausführungsbeispiel genau zwei Stiftkontakte 30 als Beispiel dafür auf, dass mindestens zwei Stiftkontakte 30 vorgesehen sein können. Die Stiftkontakte 30 sind in dem Gehäuse 10 aufgenommen. Die Stiftkontakte 30 ragen in die Aufnahmen 12 hinein. Anders ausgedrückt begrenzen die Stiftkontakte 30 die Aufnahme 12. Die Stiftkontakte 30 sind mit dem Sensorelement 20 verbunden. Die Verbindung des Sensorelements 20 mit den Stiftkontakten 30 wird durch Einlegen des Sensorelements 20 in die Aufnahme 12 und ein darauffolgendes Verlöten erreicht. Das Sensorelement 20 wird von einer Seite des Gehäuses 10 in die Aufnahme 12 gelegt/eingelegt und von der gleichen Seite mit den Stiftkontakten 30 verlötet. Entsprechend kann von der gleichen Seite der Aufnahme 12 das Sensorelement 20 mit den Stiftkontakten verlötet und inspiziert werden. Auf der anderen, den Lötstellen abgewandten Seite der Aufnahme 12 kann der Kontakt zwischen dem Sensorelement 20 und dem zu überwachenden Bereich hergestellt werden. Ist das Sensorelement 20 als Temperatursensor ausgebildet, kann der Kontakt des Sensorelements 20 auf der den Lötstellen abgewandten Seite mit dem zu überwachenden Bereich mithilfe eines Wärmepads erreicht werden.

Wie in Figur 3 zu erkennen, sind die Stiftkontakte 30 durch die Rückseite des Gehäuses 10, bis auf etwaige Öffnungen, vollständig bedeckt. Wie in Figur 1 und 2 zu erkennen, ragen die Stiftkontakte 30 in einem vorderen Bereich des Gehäuses 10 aus der Oberseite des Gehäuses 10 heraus. In diesem vorderen Bereich, in dem die Stiftkontakte 30 gegenüber der Oberseite des Gehäuses 10 vorstehen, ist das Sensorelement 20 angeordnet. Dieser Bereich kann auch als Verbindungsbereich zwischen dem Sensorelement 20 und den Stiftkontakten 30 bezeichnet werden oder auch nur kurz als Verbindungsbereich.

Die elektronische Baugruppe 1 weist in dem in den Figuren gezeigten Ausführungsbeispiel genau zwei Kontaktelemente 40 als Beispiel dafür auf, dass mindestens zwei Kontaktelemente 40 vorgesehen sein können. Die zwei Kontaktelemente 40 sind zumindest abschnittsweise in dem Gehäuse 10 aufgenommen. Wie in Figur 1 zu erkennen, sind die zwei Kontaktelemente 40 in dem gezeigten Beispiel vollständig in dem Gehäuse 10 aufgenommen. Die zwei Kontaktelemente 40 gehen mit dem Gehäuse 10 eine formschlüssige Verbindung ein. Die zwei Kontaktelemente 40 sind jeweils ausgebildet, zumindest abschnittsweise einen Kontakt mit jeweils einem der zwei Stiftkontakte 30 zu bilden. Anders ausgedrückt, zumindest ein Abschnitt der zwei Kontaktelemente 40 und zumindest ein Abschnitt der zwei Stiftkontakte 30 steht miteinander in Kontakt. Die zwei Kontaktelemente 40 sind an einem Ende jeweils mit einer Leitung 100 verbindbar und in dem in Figur 1 gezeigten Beispiel verbunden. Die Leitung 100 ist beispielhaft eine Leitung eines Leitungssatzes eines Fahrzeugs.

Das Sensorelement 20 ist in dem Verbindungsbereich mit den zwei Stiftkontakten 30 über eine stoffschlüssige Verbindung verbunden. In dem in den Figuren gezeigten Beispiel ist das Sensorelement 20 mit den zwei Stiftkontakten 30 über eine Lötverbindung verbunden. Genauer gesagt sind seitliche Anschlussflächen des Sensorelements mit den Stiftkontakten 30 verlötet. Auf diese Weise wird eine elektrische und mechanische Verbindung zwischen dem Sensorelement 20 und den zwei Stiftkontakten 30 hergestellt.

Wie in Figur 1 zu erkennen, umgeben die zwei Kontaktelemente 40 jeweils zumindest abschnittsweise jeweils einen der zwei Stiftkontakte 30. Dadurch kommen jeweils zumindest ein Abschnitt der zwei Stiftkontakte 30 und jeweils zumindest ein Abschnitt der zwei Kontaktelemente 40 miteinander in Kontakt. Auf diese Weise wird eine elektrische Verbindung / ein elektrischer Kontakt jeweils zwischen dem der Stiftkontakte 30 und dem den jeweiligen Stiftkontakt 30 umgebenden Kontaktelement 40 hergestellt. Dadurch wird eine elektrische Verbindung von dem Sensorelement 20 über die Stiftkontakte 30 und die Kontaktelemente 40 zu den Leitungen 100 hergestellt.

In Figur 2 (ebenfalls einer halbtransparenten Darstellung) sind zwei säulenförmige Ausnehmungen 14 in dem Gehäuse 10 als ein Beispiel dafür zu erkennen, dass mindestens zwei solche Ausnehmungen 14 in dem Gehäuse vorgesehen sein können. Wie ferner in Figur 2 zu erkennen, sind die zwei Stiftkontakte 30 zumindest abschnittsweise spielfrei in den zwei zumindest nahezu säulenförmigen Ausnehmungen 14 in dem Gehäuse aufgenommen. In dem in den Figuren gezeigten Ausführungsbeispiel sind die zwei Stiftkontakte 30 in einem vorderen Abschnitt SF, d. h. in einem zu dem Sensorelement 20 orientierten Abschnitt, spielfrei in den zwei Ausnehmungen 14 aufgenommen. Zugleich sind die zwei Stiftkontakte 30 zumindest abschnittsweise mit einem Spiel in den zwei zumindest nahezu säulenförmigen Ausnehmungen 14 in dem Gehäuse 10 aufgenommen. In dem in den Figuren gezeigten Ausführungsbeispiel sind die zwei Stiftkontakte 30 in einem hinteren Abschnitt SP, d. h. in einem von dem Sensorelement 20 weg orientierten Abschnitt, mit einem Spiel in den zwei Ausnehmungen 14 aufgenommen. Dies wird ermöglicht, indem die zwei Ausnehmungen 14 nicht durchgehend den gleichen Umfang oder Durchmesser haben. In dem gezeigten Beispiel hat der vordere Abschnitt SF der zwei Ausnehmungen 14 einen geringeren Umfang oder Durchmesser als der hintere Abschnitt SP. Genauer gesagt hat der vordere Abschnitt SF der zwei Ausnehmungen 14 einen Umfang oder Durchmesser, der auf den Umfang oder Durchmesser der zwei Stiftkontakte 30 angepasst oder abgestimmt ist. Noch genauer gesagt, hat der vordere Abschnitt SF der zwei Ausnehmungen 14 einen Umfang oder Durchmesser, der zumindest nahezu dem Umfang oder Durchmesser der zwei Stiftkontakte 30 entspricht. Hingegen hat der hintere Abschnitt SP einen größeren Umfang oder Durchmesser als die zwei Stiftkontakte 30.

Die zwei Kontaktelemente 40 sind, wie in Figur 1 zu erkennen, zumindest abschnittsweise in den zwei zumindest nahezu säulenförmigen Ausnehmungen 14 in dem Gehäuse 10 aufgenommen. In dem in den Figuren gezeigten Ausführungsbeispiel sind beispielhaft, wie in Figur 1 zu erkennen, die zwei Kontaktelemente entlang ihrer gesamten Länge in den zwei Ausnehmungen 14 aufgenommen. Insbesondere erstrecken sich die Kontaktelemente 40 in dem Gehäuse 10 entlang dem hinteren Abschnitt SP. Der Umfang oder Durchmesser der Kontaktelemente 40 ist hierfür auf den Umfang oder Durchmesser der Ausnehmungen 14 in dem hinteren Abschnitt SP derart abgestimmt, dass die Kontaktelemente 40 in den Ausnehmungen 14 aufgenommen werden können. Beispielsweise ist der Umfang oder Durchmesser und/oder die Querschnittsform der Kontaktelemente 40 minimal kleiner als der Umfang oder Durchmesser und/oder die Querschnittsform der Ausnehmungen 14 in dem hinteren Abschnitt SP.

Wie in Figur 1 zu erkennen, weisen die zwei Kontaktelemente 40 jeweils ein Arretierungselement 46 auf. Das Gehäuse 10 weist in dem gezeigten Ausführungsbeispiel zwei Arretierungsöffnungen 16 auf. Das Arretierungselement 46 jedes Kontaktelements 40 bildet einen Formschluss mit der zugehörigen Arretierungsöffnung 16, wenn es sich im Bereich der zugehörigen Arretierungsöffnung 16 befindet. Dies ist beispielhaft dann der Fall, wenn die Kontaktelemente 40 soweit wie möglich oder vollständig in die zugehörigen Ausnehmungen 14 eingebracht, z. B. eingeschoben, wurden. Es sind auch Beispiele mit einer Arretierungsöffnung und mit mehr als zwei Arretierungsöffnungen denkbar.

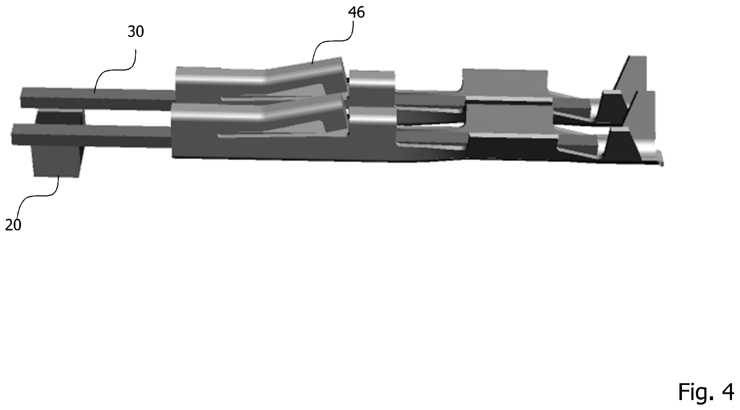

In Figur 4 ist ein Beispiel zu erkennen, in dem eine Realisierung der Arretierungselemente 46 jeweils als ein Schnappelement 46 gezeigt ist. Jedes Schnappelement 46 kann unter Spannung in der zugehörigen Ausnehmung 14 geführt werden. Befindet sich das jeweilige Schnappelement 46 im Bereich seiner zugehörigen Arretierungsöffnung 16, kann das Schnappelement 46 aufgrund der Spannung aufschnappen und in die Arretierungsöffnung 16 einschnappen. Die zwei Kontaktelemente 40 werden demnach durch eine formschlüssige Verbindung, die zwischen dem jeweiligen Schnappelement 46 und der zugehörigen Arretierungsöffnung 16 gebildet wird, in den Ausnehmungen 14 gehalten.

In dem Gehäuse 10 ist ferner eine Inspektionsöffnung 18 vorgesehen (siehe Figuren 1 und 2). Die Inspektionsöffnung 18 befindet sich, im Vergleich mit den Arretierungsöffnungen 16, näher an dem Sensorelement 20. Anstelle lediglich einer Inspektionsöffnung 18 können auch mehrere Inspektionsöffnungen vorgesehen sein. Über die Inspektionsöffnung 18 kann eine korrekte Kontaktierung zwischen den Stiftkontakten 30 und den Kontaktelementen 40 überprüft werden. In dem gezeigten Beispiel befindet sich die Arretierungsöffnung 18 in einem Bereich, in dem die Kontaktelemente 40 sich befinden, wenn sie vollständig in die Ausnehmungen 14 eingebracht wurden/sind.

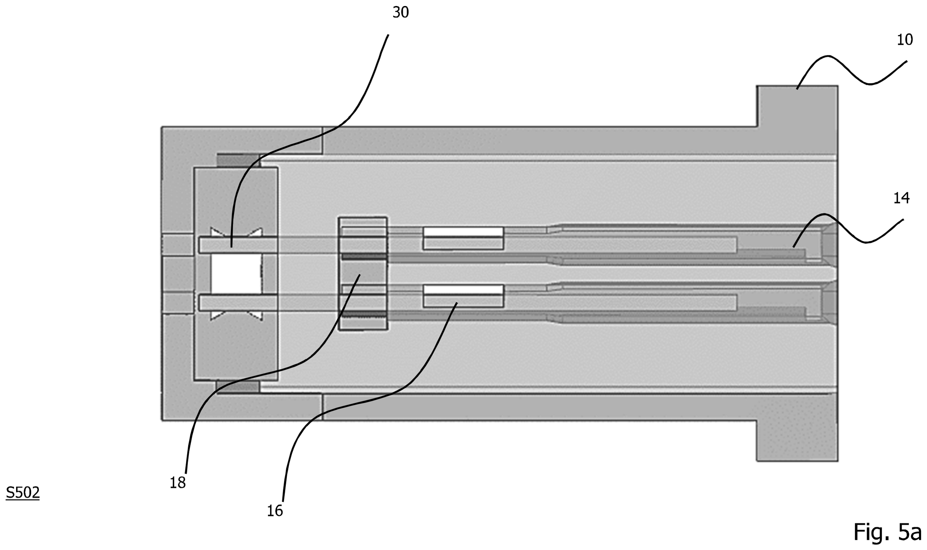

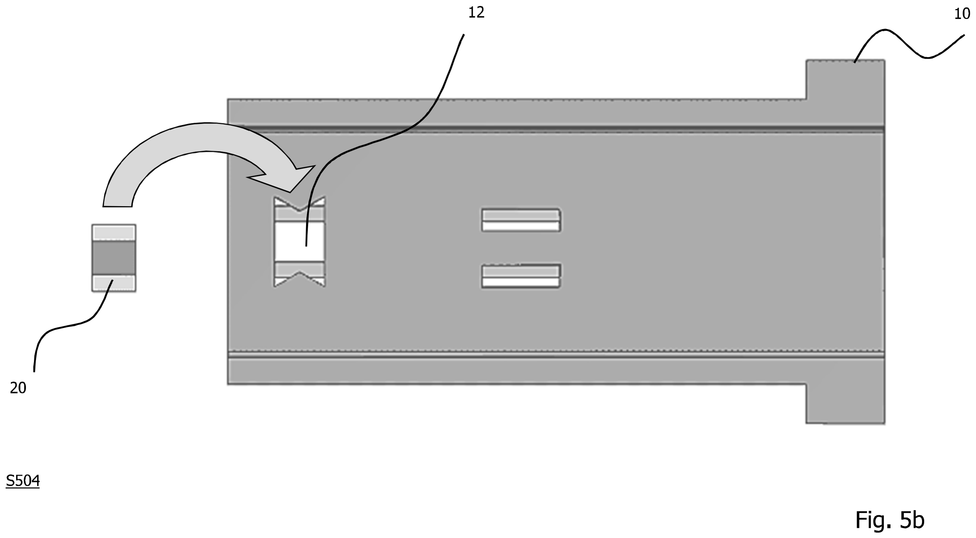

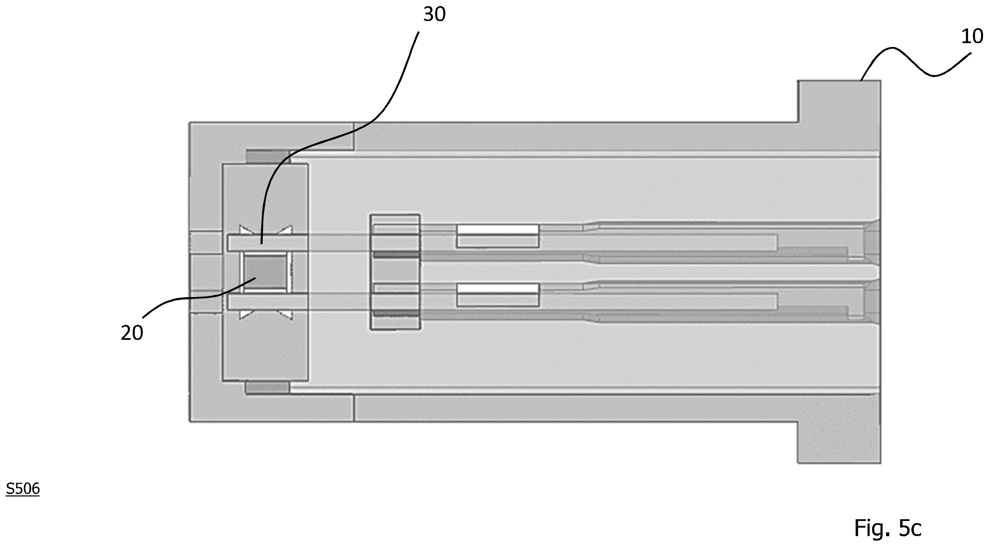

In Bezug auf die Figuren 5a bis 5d wird ein Verfahren zur Herstellung einer elektronischen Baugruppe gemäß Figur 1 beschrieben. In einem ersten Schritt S502, der in Figur 5a veranschaulicht wird, werden die Stiftkontakte 30 in dem Gehäuse 10 aufgenommen. Das Aufnehmen der zwei Stiftkontakte 30 in dem Gehäuse 10 kann auf verschiedene Art und Weise durchgeführt werden. Beispielsweise können die zwei Stiftkontakte 30 mit einem das Gehäuse 10 bildenden Material umspritzt werden. Alternativ kann das Gehäuse 10 mit einem Spritzgussverfahren hergestellt werden und anschließend können die zwei Stiftkontakte 30 in das Gehäuse 10 eingebracht oder eingeschoben oder eingeschossen werden. In einem zweiten Schritt S504, der in Figur 5b gezeigt ist, wird das Sensorelement 20 in einer Aufnahme 12 des Gehäuses 10 aufgenommen. Die Schritte S502 und S504 können auch in umgekehrter Reihenfolge durchgeführt werden. Beispielsweise kann zunächst das Gehäuse 10 durch ein Spritzgussverfahren hergestellt werden. Anschließend kann das Sensorelement 20 in die Aufnahme 12 des Gehäuses 10 eingesetzt werden. Anschließend oder gleichzeitig können die Stiftkontakte in das Gehäuse 10 eingebracht werden.

In einem Schritt S506 werden die zwei Stiftkontakte 30 mit dem Sensorelement 20 verbunden. Die Verbindung erfolgt durch eine stoffschlüssige Verbindung. Beispielsweise werden die zwei Stiftkontakte 30 mit dem Sensorelement 20 verlötet. Zum Beispiel werden zwei Anschlussflächen des Sensorelements 20, z. B. zwei verzinnte Lötflächen des Sensorelements 20, über ein geeignetes Lötverfahren, wie z.B. Laserlöten, an die Stiftkontakte 30 angelötet oder umgekehrt werden die Stiftkontakte 30 an die Anschlussflächen des Sensorelements 20 angelötet. Es ist auch denkbar, zunächst das Sensorelement 20 mit den Stiftkontakten 30, wie beschrieben, zu verbinden, z. B. zu verlöten, und anschließend das Gebilde aus Sensorelement 20 und Stiftkontakten 30 mit dem Gehäuse, z.B. durch ein Kunststoff-Spritzgussverfahren, zu umspritzen. Dadurch wird ein geeignetes Kunststoffgehäuse um das Gebilde aus Sensorelement 20 und damit verlöteten Stiftkontakten 30 gebildet.

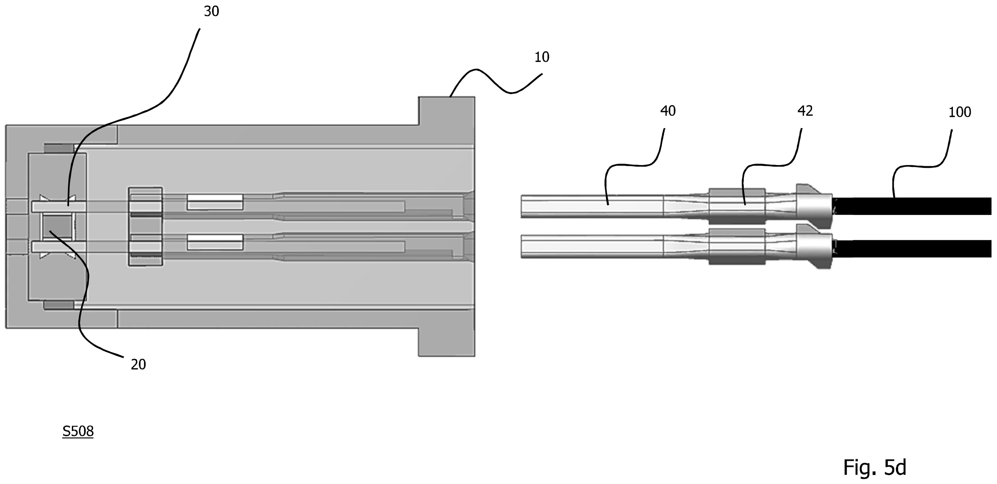

In einem Schritt S508, der in Figur 5d zu erkennen ist, werden die mindestens zwei Kontaktelemente 40 zumindest abschnittsweise in dem Gehäuse 10 unter Bildung einer formschlüssigen Verbindung mit dem Gehäuse 10 aufgenommen. Die formschlüssige Verbindung erfolgt, wie in Bezug auf Figur 4 beschrieben, beispielsweise durch Einschnappen der Schnappelemente 46 in die Arretierungsöffnungen 16. Dadurch wird in Schritt S508 zumindest abschnittsweise ein Kontakt zwischen jeweils einem der zwei Stiftkontakte 30 und jeweils einem der zwei Kontaktelemente 40 gebildet. Zudem ist der Kontakt zwischen den zwei Stiftkontakten 30 und dem entsprechenden der zwei Kontaktelemente 40 lösbar, d. h. ein lösbarer Kontakt wird bereitgestellt. Wie in Figur 5d zu sehen, werden die zwei Kontaktelemente 40 auf die zwei Stiftkontakte 30 aufgeschoben. Die Kontaktelemente 40 können gecrimpte Buchsenkontakte aufweisen. Um die Kontaktelemente 40 korrekt zu positionieren, so dass die formschlüssige Verbindung gebildet werden kann, weisen die Kontaktelemente 40 in Figur 5d jeweils Anschlagselemente 42 auf, die beim Einschieben der Kontaktelemente 40 an in den Ausnehmungen 14 vorgesehenen Gegenanschlägen anschlagen. Durch den Kontakt zwischen dem jeweiligen Anschlagselement 42 und dem zugehörigen Gegenanschlag in der entsprechenden Ausnehmung 14, wird ein weiteres Einschieben der Kontaktelemente 40 blockiert. Dadurch wird eine korrekte Positionierung der Kontaktelemente 40 in den Ausnehmungen erreicht.

In einem nicht gezeigten Schritt werden die zwei Kontaktelemente 40 an einem Ende mit jeweils mindestens einer Leitung 100 verbunden. Dieses Verbinden kann vor oder nach dem Schritt S508 vorgenommen werden. In Figur 5d sind die Leitungen 100 bereits mit ihren zugehörigen Kontaktelementen 40 verbunden. Das heißt, die Leitungen 100 wurden in diesem Fall mit den Kontaktelementen 40 verbunden, bevor die Kontaktelemente 40 in das Gehäuse 10 eingebracht werden.

Mit Hilfe der in Bezug auf Figuren 5a bis 5d beschriebenen Verfahrensschritte ist es möglich, die elektronische Baugruppe 1 in einer Fertigungslinie zumindest nahezu vollkommen automatisiert zu verarbeiten und mit Leitungen 100 oder einem Leitungssatz zu konfektionieren. Insbesondere kann eine integrierte elektronische Baugruppe 1 automatisiert mit Leitungen 100 / einem Leitungssatz verbunden werden, und zwar mechanisch und elektrisch in nur einem Arbeitsgang. Dies vereinfacht und/oder beschleunigt die Verbindung von elektronischen Bauelementen, wie dem Sensorelement 20, mit Leitungen 100 oder Leitungssätzen. Abhängig von der jeweiligen Anwendung kann zudem die Außenkontur des Gehäuses 10, beispielsweise des Kunststoffgehäuses, an die konstruktive Umgebung angepasst werden. Beispielsweise können Befestigungselemente, wie Clips, an dem Gehäuse 10 vorgesehen werden, um das Gehäuse 10 an einer gewünschten Stelle befestigen, beispielsweise verclipsen, zu können.

Bei der hierin beschriebenen elektronischen Baugruppe 1 kann zudem eine Leiterplatte/Platine (PCB) wegfallen / eingespart werden. Dies verringert den Materialaufwand und/oder Herstellungsaufwand und/oder die Herstellungskosten. Zudem kann ein Steckergehäuse an den Leitungen / am Leitungssatz entfallen. Auch dies verringert den Materialaufwand und/oder den Herstellungsaufwand und/oder die Herstellungskosten.

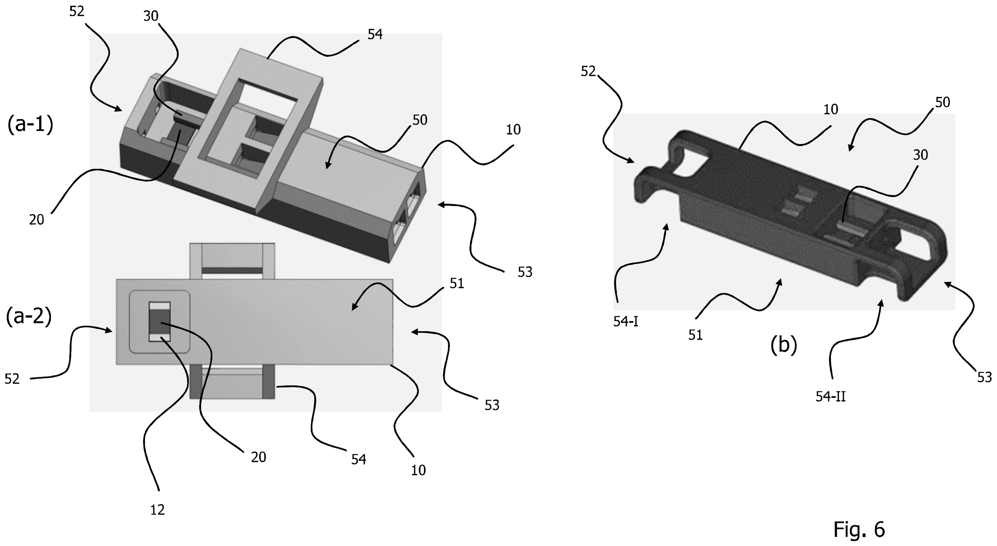

Figur 6 zeigt zwei Varianten einer elektronischen Baugruppe. Die erste Variante der Ausführungsform (Fig. 6, a-1 und a-2) und die zweite Variante der Ausführungsform (Fig. 6, b) sind beide dazu eingerichtet, einen Kabelbinder aufzunehmen und mittels dem Kabelbinder auf einer Leitung befestigt oder fixiert zu werden.

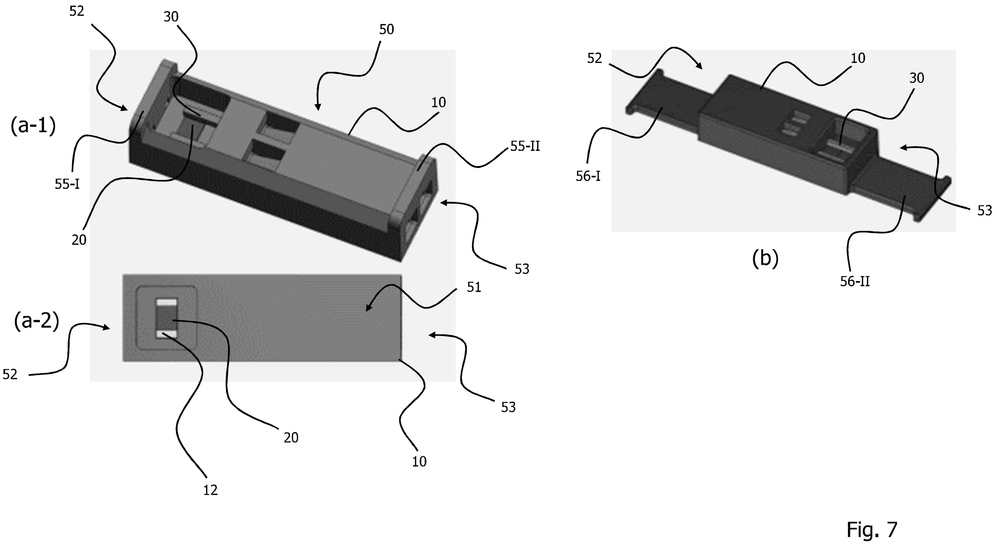

Die elektronische Baugruppe ist insbesondere geeignet für einen oder einsetzbar in/mit einem Leitungssatz eines Fahrzeugs. Die elektronische Baugruppe weist ein elektronisches Bauelement 20 auf. Das elektronische Bauelement 20 ist in Bezug auf Figur 6 und die weitere Figur 7 beispielhaft als Sensorelement ausgebildet und wird demnach im Folgenden auch als Sensorelement 20 bezeichnet. Gemäß einem Beispiel kann das Sensorelement 20 als ein SMD Bauelement ausgebildet sein.

Die elektronische Baugruppe weist ein Gehäuse 10 mit einer Aufnahme 12 auf (siehe Figur 6, a-2). Die Aufnahme 12 ist ausgebildet, das Sensorelement 20 aufzunehmen. Wie in Bezug auf Fig. 6, a-2 zu erkennen ist, durchdringt die Aufnahme 12 beispielhaft das Gehäuse 10 vollständig und ist somit sowohl von der Oberseite (siehe Figur 6, a-1) als auch von der Unterseite (siehe Figur 6, a-2) zugänglich.

Die elektronische Baugruppe weist in dem in den Figuren gezeigten Ausführungsbeispiel genau zwei Stiftkontakte 30 als Beispiel dafür auf, dass mindestens zwei Stiftkontakte 30 vorgesehen sein können. Die Stiftkontakte 30 sind in dem Gehäuse 10 aufgenommen. Die Stiftkontakte 30 sind mit dem Sensorelement 20 verbunden.

Wie in Figur 6, a-2 zu erkennen, sind die Stiftkontakte 30 durch die Rückseite des Gehäuses 10, bis auf etwaige Öffnungen, vollständig bedeckt. Wie in Figur 6, a-1 erkennen, ragen die Stiftkontakte 30 in einem vorderen Bereich des Gehäuses 10 aus der Oberseite des Gehäuses 10 heraus. In diesem vorderen Bereich, in dem die Stiftkontakte 30 gegenüber der Oberseite des Gehäuses 10 vorstehen, ist das Sensorelement 20 angeordnet. Dieser Bereich kann auch als Verbindungsbereich zwischen dem Sensorelement 20 und den Stiftkontakten 30 bezeichnet werden oder auch nur kurz als Verbindungsbereich.

Die Oberseite 50 der ersten Variante weist eine Durchführung 54 auf, die auf der Oberseite 50 des Gehäuses 10 anordnet ist und mit dem Gehäuse 10 verbunden ist. Die Durchführung 54 und das Gehäuse sind einstückig ausgebildet. Die Durchführung 54 erstreckt sich quer zu einer Längsachse des Gehäuses 10. Die Durchführung 54 überragt eine Querausdehnung des Gehäuses 10. Durch die Durchführung 54 kann ein Kabelbinder gelegt werden. Wenn das elektronische Bauelement mit der Unterseite 51 auf eine Leitung gelegt wird, kann der durch/in die Durchführung gelegte Kabelbinder um die Leitung, entlang dessen Umfang und/oder quer, insbesondere senkrecht, zu der Längsachse der Leitung, gelegt und geschlossen werden. Die elektronische Baugruppe ist damit auf der Leitung fixiert.

Die ersten und zweiten Enden 52, 53 der zweiten Variante (Fig. 6, b) weisen jeweils eine Durchführung 54-1, 54-II auf. Durch jene kann jeweils ein Kabelbinder gelegt werden. Wenn das elektronische Bauelement mit der Unterseite 51 auf eine Leitung gelegt wird, können die durch/in die jeweilige Durchführung gelegten Kabelbinder um die Leitung, entlang dessen Umfang und/oder quer, insbesondere senkrecht, zu der Längsachse der Leitung, gelegt und geschlossen werden. Die elektronische Baugruppe ist damit auf der Leitung fixiert.

Figur 7 zeigt zwei weitere Varianten einer elektronischen Baugruppe. Die erste der weiteren Variante der Ausführungsform (Fig. 7, a-1 und a-2) und die zweite der weiteren Variante der Ausführungsform (Fig. 7, b) sind beide dazu eingerichtet, ein Tape oder Band aufzunehmen und mittels jenem auf einer Leitung befestigt oder fixiert zu werden.

Die elektronische Baugruppe ist insbesondere geeignet für einen oder einsetzbar in/mit einem Leitungssatz eines Fahrzeugs. Die elektronische Baugruppe weist ein elektronisches Bauelement 20 auf. Das elektronische Bauelement 20 ist nicht nur in Bezug auf Figur 6, sondern auch auf die weitere Figur 7 beispielhaft als Sensorelement ausgebildet und wird demnach im Folgenden auch als Sensorelement 20 bezeichnet. Gemäß einem Beispiel kann das Sensorelement 20 als ein SMD Bauelement ausgebildet sein.

Die elektronische Baugruppe weist ein Gehäuse 10 mit einer Aufnahme 12 auf (siehe Figur 7, a-2). Die Aufnahme 12 ist ausgebildet, das Sensorelement 20 aufzunehmen. Wie in Bezug auf Fig. 7 a-2 zu erkennen ist, durchdringt die Aufnahme 12 beispielhaft das Gehäuse 10 vollständig und ist somit sowohl von der Oberseite (siehe Figur 7, a-1) als auch von der Unterseite (siehe Figur 7 a-2) zugänglich.

Die elektronische Baugruppe weist in dem in den Figuren gezeigten Ausführungsbeispiel genau zwei Stiftkontakte 30 als Beispiel dafür auf, dass mindestens zwei Stiftkontakte 30 vorgesehen sein können. Die Stiftkontakte 30 sind in dem Gehäuse 10 aufgenommen. Die Stiftkontakte 30 sind mit dem Sensorelement 20 verbunden.

Wie in Figur 7, a-2 zu erkennen, sind die Stiftkontakte 30 durch die Rückseite des Gehäuses 10, bis auf etwaige Öffnungen, vollständig bedeckt. Wie in Figur 7, a-2 zu erkennen, ragen die Stiftkontakte 30 in einem vorderen Bereich des Gehäuses 10 aus der Oberseite des Gehäuses 10 heraus. In diesem vorderen Bereich, in dem die Stiftkontakte 30 gegenüber der Oberseite des Gehäuses 10 vorstehen, ist das Sensorelement 20 angeordnet. Dieser Bereich kann auch als Verbindungsbereich zwischen dem Sensorelement 20 und den Stiftkontakten 30 bezeichnet werden oder auch nur kurz als Verbindungsbereich.

Die Oberseite 50 der erste der weiteren Variante weist einen ersten und zweiten Rand 55-I, 55-II auf, der auf der Oberseite 50 des Gehäuses 10 angeordnet ist und mit dem Gehäuse 10 verbunden ist. Die Ränder 55-I, 55-II und das Gehäuse sind einstückig ausgebildet. Die Ränder 55-1, 55-II erstrecken sich quer zu einer Längsachse des Gehäuses 10. Auf die durch die Ränder 55-I, 55-II begrenzte Oberfläche 51 kann ein Band/Tape gelegt werden. Wenn das elektronische Bauelement mit der Unterseite 51 auf eine Leitung gelegt wird, kann das auf die Oberfläche 51 gelegte Band/Tape um die Leitung, entlang dessen Umfang und/oder quer, insbesondere senkrecht, zu der Längsachse der Leitung, gelegt werden. Die elektronische Baugruppe ist auf der Leitung fixiert.

Die ersten und zweiten Enden 52, 53 der zweiten weiteren Varianten (Fig. 7, b) weisen jeweils eine Fixiersteg 56-I, 56-II auf. Auf jene kann jeweils ein Band/Tape gelegt werden. Wenn das elektronische Bauelement mit der Unterseite 51 auf eine Leitung gelegt wird, kann das auf die Fixierstege 56-I, 56-II gelegte Band/Tape um die Leitung, entlang dessen Umfang und/oder quer, insbesondere senkrecht, zu der Längsachse der Leitung, gelegt werden. Die elektronische Baugruppe ist auf der Leitung fixiert.

## Patentansprüche

1. Elektronische Baugruppe (1), insbesondere für einen Leitungssatz eines Fahrzeugs, wobei die elektronische Baugruppe (1) aufweist:
ein elektronisches Bauelement (20), insbesondere ein Sensorelement;
ein Gehäuse (10) mit einer Aufnahme (12), die ausgebildet ist, das elektronische Bauelement (20) aufzunehmen;
mindestens zwei Stiftkontakte (30), die zumindest abschnittsweise in dem Gehäuse (10) aufgenommen und mit dem elektronischen Bauelement (20) verbunden sind; und
mindestens zwei Kontaktelemente (40), die
zumindest abschnittsweise, unter Bildung einer formschlüssigen Verbindung mit dem Gehäuse (10), in dem Gehäuse (10) aufgenommen sind,
jeweils ausgebildet sind, zumindest abschnittsweise einen Kontakt mit jeweils einem der mindestens zwei Stiftkontakte (30) einzugehen, und
an einem Ende mit mindestens einer Leitung (100) verbindbar oder verbunden sind.

2. Elektronische Baugruppe (1) nach Anspruch 1, wobei das elektronische Bauelement (20) mit den mindestens zwei Stiftkontakten (30) über eine stoffschlüssige Verbindung, insbesondere eine Lötverbindung und/oder Schweißverbindung, verbunden ist.

3. Elektronische Baugruppe (1) nach Anspruch 1 oder 2, wobei die mindestens zwei Kontaktelemente (40) jeweils ausgebildet sind, zumindest abschnittsweise einen lösbaren Kontakt mit jeweils einem der mindestens zwei Stiftkontakte (30) einzugehen.

4. Elektronische Baugruppe (1) nach einem der Ansprüche 1 bis 3, wobei die mindestens zwei Kontaktelemente (40) jeweils ausgebildet sind, zumindest abschnittsweise die mindestens zwei Stiftkontakte (30) derart zu umgeben, dass jeweils zumindest ein Abschnitt der mindestens zwei Stiftkontakte (30) und jeweils zumindest ein Abschnitt der mindestens zwei Kontaktelemente (40) miteinander in Kontakt stehen.

5. Elektronische Baugruppe (1) nach einem der Ansprüche 1 bis 4, wobei die mindestens zwei Stiftkontakte (30) zumindest abschnittsweise spielfrei in zumindest zwei zumindest nahezu säulenförmigen Ausnehmungen (14) in dem Gehäuse (10) aufgenommen sind.

6. Elektronische Baugruppe (1) nach einem der Ansprüche 1 bis 5, wobei die mindestens zwei Stiftkontakte (30) zumindest abschnittsweise mit einem Spiel in zumindest zwei zumindest nahezu säulenförmigen Ausnehmungen (14) in dem Gehäuse (10) aufgenommen sind.

7. Elektronische Baugruppe (1) nach einem der Ansprüche 1 bis 6, wobei die mindestens zwei Kontaktelemente (40) zumindest abschnittsweise in zumindest zwei zumindest nahezu säulenförmigen Ausnehmungen (14) in dem Gehäuse (10) aufgenommen sind.

8. Elektronische Baugruppe (1) nach einem der Ansprüche 1 bis 7, wobei die mindestens zwei Kontaktelemente (40) jeweils ein Arretierungselement (46), insbesondere Rastelement oder Schnappelement, aufweisen und das Gehäuse (10) mindestens eine Arretierungsöffnung (16) aufweist, wobei das jeweilige Arretierungselement (46) ausgebildet und angeordnet ist, mit der Arretierungsöffnung (16) des Gehäuses (10) die formschlüssige Verbindung zu bilden.

9. Verfahren zur Herstellung einer elektronischen Baugruppe (1), insbesondere für einen Leitungssatz eines Fahrzeugs, wobei das Verfahren umfasst:
Zumindest abschnittsweises Aufnehmen (S502) von mindestens zwei Stiftkontakten (30) in einem Gehäuse (10);
Aufnehmen (S504) eines elektronischen Bauelements (20), insbesondere eines Sensorelements, in einer Aufnahme (12) des Gehäuses (10);
Verbinden (S506) der mindestens zwei Stiftkontakte (30) mit dem elektronischen Bauelement (10);
Zumindest abschnittsweises Aufnehmen (S508) von mindestens zwei Kontaktelementen (40) in dem Gehäuse (10) unter Bildung einer formschlüssigen Verbindung mit dem Gehäuse (10), wobei die mindestens zwei Kontaktelemente jeweils an einem Ende mit mindestens einer Leitung (100) verbindbar oder verbunden sind; und
zumindest abschnittsweises Eingehen eines Kontakt zwischen jeweils einem der mindestens zwei Stiftkontakte (30) und jeweils einem der mindestens zwei Kontaktelemente (40).

10. Verfahren nach Anspruch 9, wobei das zumindest abschnittsweise Aufnehmen (S502) der mindestens zwei Stiftkontakte (30) in dem Gehäuse (10) ein Umspritzen der mindestens zwei Stiftkontakte (30) mit einem das Gehäuse (10) bildenden Material umfasst, oder
wobei das zumindest abschnittsweise Aufnehmen (S502) der mindestens zwei Stiftkontakte (30) in dem Gehäuse (10) ein Einbringen, insbesondere ein Einschieben oder Einschießen, der mindestens zwei Stiftkontakte (30) in das Gehäuse (10) umfasst.

11. Verfahren nach Anspruch 9 oder 10, wobei das Verbinden (S506) der mindestens zwei Stiftkontakte (30) mit dem elektronischen Bauelement (10) ein Verlöten und/oder Schweißen der mindestens zwei Stiftkontakte (30) mit dem elektronischen Bauelement (10) umfasst.

12. Verfahren nach einem der Ansprüche 9 bis 11, wobei das zumindest abschnittsweise Eingehen des Kontakts zwischen jeweils einem der mindestens zwei Stiftkontakte und jeweils einem der mindestens zwei Kontaktelemente ein Eingehen eines lösbaren Kontakts zwischen jeweils einem der mindestens zwei Stiftkontakte und jeweils einem der mindestens zwei Kontaktelemente umfasst.

13. Verfahren nach einem der Ansprüche 9 bis 12, wobei das zumindest abschnittsweise Eingehen des Kontakts zwischen jeweils einem der mindestens zwei Stiftkontakte (30) und jeweils einem der mindestens zwei Kontaktelemente (30) ein Aufschieben der mindestens zwei Kontaktelemente (40) auf die mindestens zwei Stiftkontakte (30) umfasst.

14. Verfahren nach einem der Ansprüche 9 bis 13, wobei das zumindest abschnittsweise Aufnehmen (S508) der mindestens zwei Kontaktelemente (40) in dem Gehäuse (10) unter Bildung einer formschlüssigen Verbindung mit dem Gehäuse (10) ein Einschieben der mindestens zwei Kontaktelemente (40) in das Gehäuse (10) und ein Verrasten oder Verschnappen der mindestens zwei Kontaktelemente (40) mit dem Gehäuse (10) umfasst.

15. Leitungssatz für ein Fahrzeug, wobei der Leitungssatz aufweist:
mehrere Leitungen (100);
mindesten eine elektronische Baugruppe (1) nach einem der Ansprüche 1 bis 8.
